(19) Europäisches Patentamt / European Patent Office / Office européen des brevets

(11) **EP 3 627 411 A1**

(12) # EUROPEAN PATENT APPLICATION

(43) Date of publication:
**25.03.2020 Bulletin 2020/13**

(21) Application number: **19173469.8**

(22) Date of filing: **09.05.2019**

(51) Int Cl.:
*G06Q 10/08* (2012.01)      *G06Q 10/06* (2012.01)
*G06Q 50/30* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.09.2018 MY PI2018703348**

(71) Applicant: **Singh, Jayvinder
Ampang Selangor (MY)**

(72) Inventor: **Singh, Jayvinder
Ampang Selangor (MY)**

(74) Representative: **Capasso, Olga et al
De Simone & Partners SpA
Via Vincenzo Bellini, 20
00198 Roma (IT)**

(54) **SYSTEM AND METHOD FOR PROVIDING PERSONALIZED SECURITY SERVICES**

(57)   The present invention relates to system and method for providing personalized security services to user via a computing device. Particularly, for providing personalized security services in real-time to an individual and also scheduled personalized security services to the individual. Other advantage of the system of the present invention, it reduces redundancy of the replications of cost and time by assigning security job digitally rather than manually. The system of the present invention allows the user to get the personalized security services when needed especially during emergency and life-threatening situation. Moreover, the management of an organization is able to see visible leakage in efforts and time but also promotes to take necessary action to reduce the risks in the personal security services.

*Figure 1*

EP 3 627 411 A1

**Description**

**FIELD OF THE INVENTION**

The present invention herein relates to system and method for providing personalized security services to a user via a computing device. Particularly, for providing personalized security services in real-time to an individual and also scheduled personalized security services to the individual.

**BACKGROUND OF THE INVENTION**

Personal security has always been a priority for everyone, especially for women and children. There are many types of threats and danger, a person can encounter and, in some cases, the official services of a country such as police, military or ambulance are not ideal to assist especially during emergency and life-threatening situation. A smartphone is a useful tool to overcome these unfortunate incidents. With a mobile application installed into the smartphone on the assistance for personal security services, it can be the fastest and most effective solution to prevent and to avoid the unfortunate incident to happen.

Patent Application, KR 20180046641 A disclosed a method for providing a real-time secret guard service comprises the steps of: requesting a guard service by a requester; allowing a bodyguard to agree with a guard service; transmitting a location coordinate to a guard server by the requester; transmitting the location coordinate to the guard server by the bodyguard; converting and storing the location information by the guard server; transmitting, by the guard server, the location information of the requester to a wireless terminal of the bodyguard; and transmitting, by the guard server, the location information of the bodyguard to the wireless terminal of the requester. According to the present invention, when a guard service is performed, the guard service is secretly performed so that a third party cannot know a guard situation, and a bodyguard can promptly cope with a case when a requester is in danger.

Meanwhile, the Korean KR101714499 is another prior art using mobile application for an automatic guard arranging method. The method includes: a step of transmitting guarding request information of a requester to a guarding company server through a mobile communication terminal of the requester; a step of matching a guard, having guard information corresponding to the guarding request information, through the guarding company server; a step of transmitting the guarding request information to an exclusive terminal of the matched guard through the guarding company server; a step of transmitting guarding dispatch information from the exclusive terminal, receiving the guarding request information, to the guarding company server; a step of delivering an arrangement report based on the guarding dispatch information from the guarding company server to a precinct server; and a step of guiding guarding dispatch by transmitting the guarding dispatch information from the guarding company server to the mobile communication terminal of the user.

Another prior art WO2017171614A1 provides a computer program and method for facilitating personal safety of a user, the computer program comprising computer program code which, when run on a security matching server causes the security matching server to: receive an assistance request concerning a security event from a device of the user, the assistance request comprising a location indication of the user; assign a security guard, selected from a plurality of security guards, to the security event, which comprises: sending a notification message to a plurality of security guard device, the notification message comprising details of the assistance request; receiving a response message from at least one responding security guard device; and determining which one of the responding security guard devices to assign to the security event, which comprises evaluating historic performance of each security guard; determine collocation by determining that the user and the assigned security guard have been collocated, for longer than a first threshold period; determine separation by determining that the user and the assigned security guard are no longer collocated, for longer than a second threshold period; request feedback information from the user, regarding performance of the assigned security guard; store feedback information in the security guard performance database; and establish an audio communication session between the device of the user and a device of the assigned security guard; wherein the computer code to request feedback and store feedback are only executed after executing the computer code to determine collocation and determine separation.

However, all methods and systems of these prior art documents is limited to real-time requesting for personal security as bodyguards for the user. Furthermore, the user could not pre-book for a schedule personalized security services in the mobile application for pre-determined event as required.

In view of the above shortcomings, the present invention herein aims to provide system and method for providing personalized security services to user via a computing device. Particularly, for providing personalized security services in real-time to an individual and also scheduled personalized security services to the individual with different personal security services including service whereby the security unmarked vehicle can be requested for pick-up during evacuation from emergency, undercover movement, marshalling and tailing services. In addition, such system can be conveniently installed and maintained in a simple technical process, low cost with high efficiency and time.

**SUMMARY OF THE INVENTION**

The present invention herein provides a computer-implemented method for providing personalized security services comprising selecting pick-up point, drop off point and destination for personalized security services by a user via a computing device; selecting a booking type and type of services, personalized security services; selecting a service category of the personalized security services; selecting quantity and duration of the deployment for personalized security services; selecting apparel to be worn by a personal security candidate during an assignment of a duty and providing special instructions to the personal security candidate prior an engagement of the duty; matching the selected criteria by the user to personal security candidates available in the database of the server in the system; upon confirmation of at least one selected personal security candidate, making pre-payment in the computing device of the user as pre-determined personalized security services; sending notification to a computing device of at least one selected personal security candidate and assigning the security job to the at least one selected personal security candidate; receiving notification of the official receipt for the payment made from the system to registered email addresses; and meeting at least one selected personal security candidate at the selected location to provide the personalized security services.

A system for providing a real-time personalized security services comprising a user module in a server of the system by providing an user to download as a software application in a computing device and register the details of the user into the system for allowing the user to place an order for requesting personalized security services using the user's computing device wherein the user is allowed to select personalized security services based on booking type and type of services, selection service category of personalized security services, selection of uniform of the selected personal security candidate; a personal security candidate module in the server of the system by providing a personal security candidate to download as a software application in a computing device and register in the system as personal security candidate wherein the registered personal security candidate is ready to be selected by the user in the computing device to provide personalized security services in real-time and scheduled time and date; an admin module in the server of the system by providing an personnel administration to download as a software application in a computing device to manage each order and request placed by the user in a software application in the computing device by tracking each order and request placed by the user and monitor status of each order and request from the user for the personalized security services in real-time and scheduled time and date.

The system of the present invention herein provides to streamline, monitor and effectively improve the personal security services to personalized security services of any users or an organization. By providing a real-time status and solution on a scheduled booking of each order, users are able to take preventive measures to deter and mitigate danger on any life-threatening situations anytime and anywhere.

Further advantages of the system in accordance with the invention herein and its application can be derived from the description and the accompanying drawings. The above-mentioned features and those to be further described below can be utilized in accordance with the invention individually or collectively in arbitrary combination. The embodiments mentioned are not to be considered exhaustive enumerations, rather have exemplary character. The invention is shown in the drawings and explained more closely with reference to embodiments.

**BRIEF DESCRIPTION OF THE DRAWINGS**

The accompanying drawings, which are incorporated in and constitute a part of the specification, illustrate embodiments of the invention and, together with the description, serve to explain the principles of the invention.

**Figure 1** illustrates a system for providing a real-time personalized security services having a user module in a server of the system, a personal security candidate module in the server of the system and an admin module in the server of the system in accordance of the present invention.

**Figure 2** illustrates a flow chart of a computer-implemented method for providing a real-time personalized security services to the user via a computing device in accordance of the present invention.

**Figure 3** illustrates a flow chart for selection of personal security candidate of a computer-implemented method for providing personalized security services to the user via a computing device in accordance of the present invention.

**Figure 4** illustrates a flow chart for registration of personal security candidate of a computer-implemented method for providing personalized security services to the user via a computing device in accordance of the present invention.

**Figure 5** illustrates an example of user interface and user experience of mobile application for providing personalized security services to the user via a computing device in accordance of the present invention.

**Figure 6** illustrates an example of user interface and user experience of mobile application for registration of personal security candidate of a computer-implemented method for providing personalized security services to the user via a computing device in accordance of the present invention.

## DETAILED DESCRIPTIONS OF THE INVENTION

The present invention will now be described in detail in connection with specific embodiments with reference to the accompanying drawings. Unless the context requires otherwise, throughout the specification and claims which follow, the word "comprise" and variations thereof, such as, "comprises" and "comprising" are to be construed in an open, inclusive sense that is as "including, but not limited to". Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments. With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

The terms "module" and "function," as used herein, mean, but are not limited to, a software or hardware component which performs certain tasks. A module may advantageously be configured to reside on addressable storage medium and configured to execute on one or more processors. A module may be fully or partially implemented with a general purpose integrated circuit ("IC"), FPGA, or ASIC. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. Additionally, the components and modules may advantageously be implemented on many different platforms, including computers, computer servers, data communications infrastructure equipment such as application-enabled switches or routers, or telecommunications infrastructure equipment, such as public or private telephone switches or private branch exchanges ("PBX"). In any of these cases, implementation may be achieved either by writing applications that are native to the chosen platform, or by interfacing the platform to one or more external application engines.

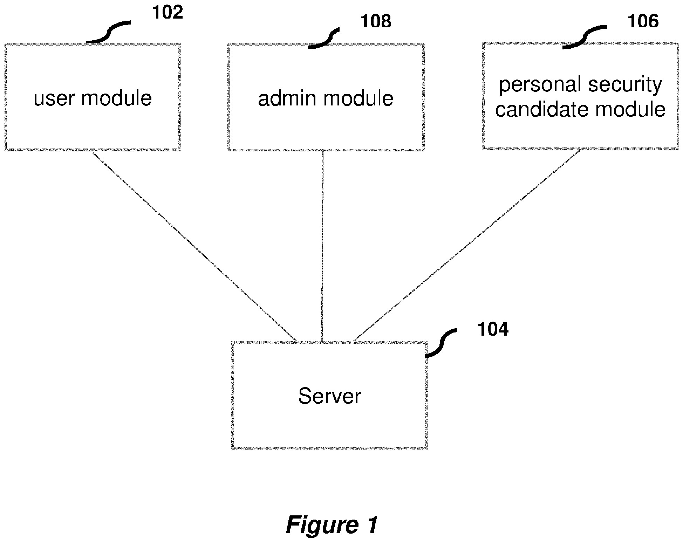

**Figure 1** illustrates a flow chart of a computer-implemented method for providing a real-time personalized security services to the user via a computing device in accordance of the present invention. A system for providing a real-time personalized security services comprising a user module **(102)** in a server **(104)** of the system, a personal security candidate module **(106)** in the server **(104)** of the system and an admin module **(108)** in the server **(104)** of the system.

The user module **(102)** is provided to a user to download as a software application in a computing device. Subsequently, the user is allowed to register the details of the user into server of the system for allowing the user to place an order for requesting personalized security services using the user's computing device. The software application in the computing device preferably a mobile computing device allows the user to select personalized security services based on booking type and type of services, selection of service category of personalized security services, selection of uniform of the selected personal security candidate to attend an event based on customization.

Meanwhile, a personal security candidate module **(106)** in the server **(104)** of the system by providing a personal security candidate to download as a software application in a computing device and register in the system as personal security candidate. Upon registration, the registered personal security candidate is ready to be selected by the user in the computing device to provide the personalized security services in real-time and scheduled time and date as requested by the user via the software application in the computing device. Every communication between the user and the personal security candidate is recorded in the server.

The admin module **(108)** in the server **(104)** of the system provides a personnel administration to download as software application in a computing device to manage each order and request placed by the user in a software application in the computing device. The admin module further provides tracking each order and request placed by the user and monitor status of each order and request from the user for the personalized security services in real-time and scheduled time and date. In event there is discrepancy or error in the server and the software application, the personnel administration will perform system updates, and to make correction any errors in the software application in the server. All the details of each user and personal security candidate can be viewed in the admin module. This included the reviews by the user and personal security candidate such any complaints or comments as well as preparing reports for each order for different users on the personalized security services provided in the present invention. In another embodiment, the admin module in the server of the system is allowed to set up and regulate the cost of each category of personalized security services. The admin module in the server of the system is further allowed to edit information for personalized security services in the system and to send customization notification to the user and personal security candidate.

In one embodiment, the communication between modules via web-based system or with communication via application in a mobile phone which can be downloaded by android of a Google PlayStore or Apple App store via application program interface (API) or other forms of application stores. The mobile computing device can be any of a variety of appropriate mobile computing device, such as a smartphone, a PDA, a tablet computing device, a laptop, a wearable computing device (e.g., GOOGLE GLASS, smartwatches), a computing device embedded within a vehicle (e.g., embedded automobile computer system, truck, car, airplane, bus, helicopter, boat), and/or other appropriate mobile computing device. In some implementations, the mobile computing device can be a non-mobile computing device, such as a desktop computer.

For instance, the system of the present invention herein is set to calculate the cost of the personalized security services order also known as customized order according to the following formula for each service automatically based on the rates set by the admin module in the services sections based on the following formula:

## (Service Per Hour Rate X Number of Hour + Outstation Charges) X Number of Service Providers X Type of Services and / or Level of Services.

Outstation Charges are included if the distance between meet up location and distance of the order exceeds from the range of extra charging set in the admin module and is calculated according to the following formula:

## (Distance between meetup and destination - Range of extra charging) X Outstation Charges Per KM

Unlike prior art documents, the system of the present invention provides the booking type of the personalized security services into two customization options. The first option is based on the selected option based on real-time also known as immediate booking in the present invention. If a selected option is an immediate booking for the personalized security services, a list of personal security candidates available in the database of the server in real-time within vicinity of the user's computing device for selection via Global Positioning System (GPS) location be provided to the user to choose. It is preferred that upon requesting the immediate booking, the software application of the user will scan the list of personal security candidates up to 30 km radius from the location of the user's computing device and for scheduled personalized security candidates up to 50 km. The second option is based on schedule booking of the personalized security services. If a selected option is a schedule booking for the personalized security services, a list of personal security candidates available in the database of the server as per scheduled time and date as well as location for the personalized security services requested will be provided to the user for selection.

Another customization of the present invention herein is the selection service category of the personalized security services. The user is allowed to select any of the following categories for personalized security services to as follows:

a) bodyguard services to the user;
b) chauffeur and bodyguard services to the user;
c) chauffeur services to the user;
d) chauffeur and bodyguard services using the selected personal security candidate's unmarked vehicle to the user; and
e) security services for premise guarding such as commercial building, residential premises and tailgating services, marshaling services (as spying and private investigating activities) to the user.

Upon confirmation of the booking type and selection service category of personalized security services, the software application allows the user to select types of apparel to be worn by the personnel security candidate such in different types of clothing from standard security guard uniform, undercover apparel up to customization of the clothing for personal security candidate from a list of apparels prior attending the personalized security services to the user for the assigned assignment. It is preferred that the personal security candidate is selected based on their experience and seniority in handling security services with minimum of basic guard training and first aid training. For instance, there will be different selection range of personal security candidates based on categories from premium, intermediate and basic wherein the personal security candidate is fully trained and experience will be in premium category, followed by intermediate category to basic category.

Once an order is successfully placed after payment, the user will be able to communicate with the member in a chat room function in the software application or a phone call option. Other features such as the cancellation of any order before making the payment, viewing the order history in the orders section with different status such as pending, accepted and completed orders separately in the respective sections are available in the software application for the user. In the event that there is a danger of the user during personalized security services provided by the personal security candidate, a SOS button is provided in the software application as distress signal. For instance, such distress signal which allows three (3) minutes voice recording and SOS short messages to be sent to a few assigned numbers as alternative for emergency purposes.

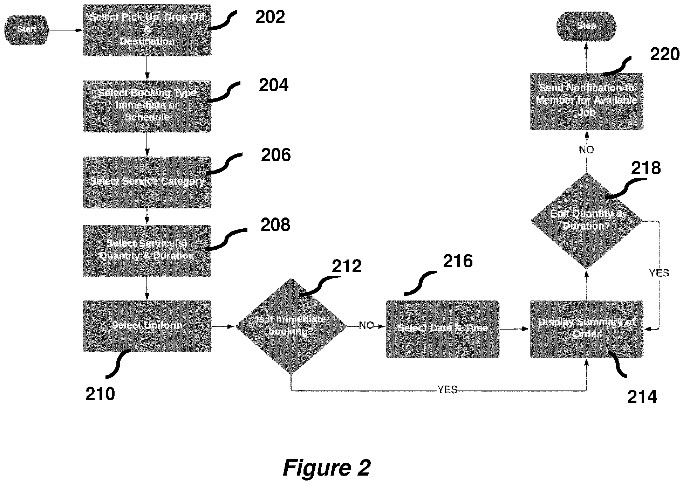

**Figure 2** illustrates a flow chart of a computer-implemented method for providing a real-time personalized security services to the user via a computing device in accordance of the present invention. The process begins by selecting pick-up point and destination **(202)** for personalized security services by a user via a computing device. Next, the user is provided with user interface to select a booking type of the personalized security services **(204)**. Subsequently, the user is allowed to select a service category of the personalized security services **(206)**. Thereafter, quantity and duration **(208)** of deployment for personalized security services will be selected by the user. Then, selecting apparel to be worn by a personal security candidate **(210)** during an assignment of a duty and providing special instructions to the personal security candidate if any. During this stage, the user is required to confirm whether the personalized security services is immediate booking **(212)**. If it is immediate booking, software application will proceed to elevate the user to another level to summary order **(214)**. If the booking is not immediate, the user is required to enter the time and date as well as location **(216)** for the personal security candidate to be present. The user is further allowed to duration and number of personal security candidates **(218)** for the event.

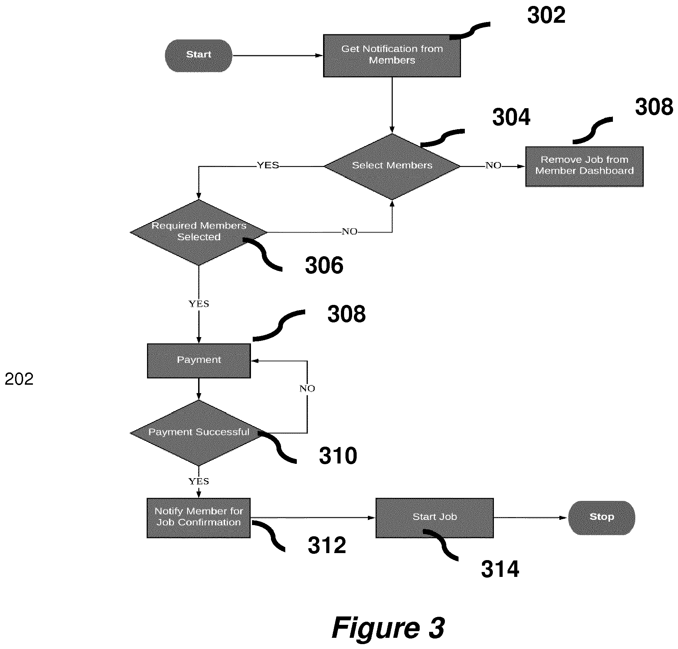

**Figure 3** illustrates a flow chart for selection of personal security candidate of a computer-implemented method for providing personal security services and personalized security services to the user via a computing device in accordance of the present invention. A matching process **(220,302)** for the selected criteria by the user to personal security candidates available **(304)** in the database of the server in the system will be performed. A list of personal security candidates **(306)** is then displayed in the user interface of software application to allow the user to choose. For example, there will be a minimum selection of three candidates available in the vicinity of the user's computing device to be selected. If the personal security candidate is not selected **(308)**, it will be removed from the user interface of the user's computing device. Upon confirmation of at least one selected personal security candidate, the user is required to make pre-payment **(308, 310)** in the computing device of the user as pre-determined personalized security services. Thereafter, a notification **(312)** is sent to a computing device of at least one selected personal security candidate and assigning **(314)** the security job to at least one selected personal security candidate. Immediately, a notification of the official receipt for the payment made from the system will be sent to the user in software application. Finally, the user meets at least one selected personal security candidate at the selected location to provide the personalized security services.

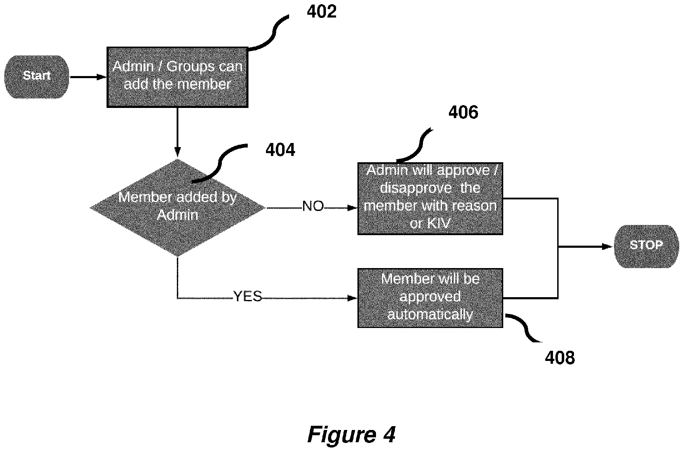

**Figure 4** illustrates a flow chart for registration of personal security candidate of a computer-implemented method for providing personalized security services to the user via a computing device in accordance of the present invention. An interested personal security candidate is allowed to register using the mobile application **(402)** and added **(404)** to the system to be approved by the personnel administration in the admin module in the server of the system. Prior to approval, the personnel administration is required to conduct background check of the personal security candidate such as education background, criminal records, bankruptcy and others. In the event that the personal security candidate is not fulfilled the criteria, the application will be disapproved and rejected **(406)**. Otherwise, the application will be approved and accepted by the personnel administration **(408)** and thereafter the name of applicant will be added into the list of personal security candidates in the system to be selected by the user. Based on the input given by the personal security candidates on registration process, the personnel administration will determine and classify the personal security candidate into appropriate security categories such as premium, intermediate or basic.

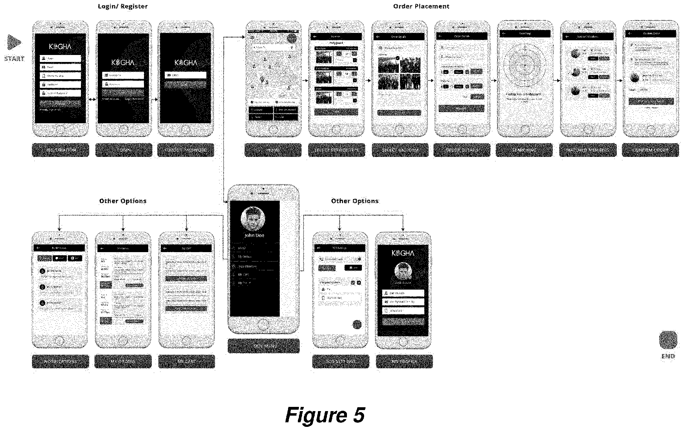

**Figure 5** illustrates an example of user interface and user experience of mobile application for providing personalized security services to the user via a computing device in accordance of the present invention. As noted above, embodiments within the scope of the invention include program products comprising computer-readable media for carrying or having computer-executable instructions or data structures stored thereon. Such computer-readable media can be any available media which can be accessed by a general purpose or special purpose computer. By way of example, such computer-readable media can comprise RAM, ROM, EPROM, EEPROM, CD-ROM or other optical disk storage, magnetic disk storage or other magnetic storage devices, or any other medium that can be used to carry or store desired program code in the form of computer-executable instructions or data structures and which can be accessed by a general purpose or special purpose computer.

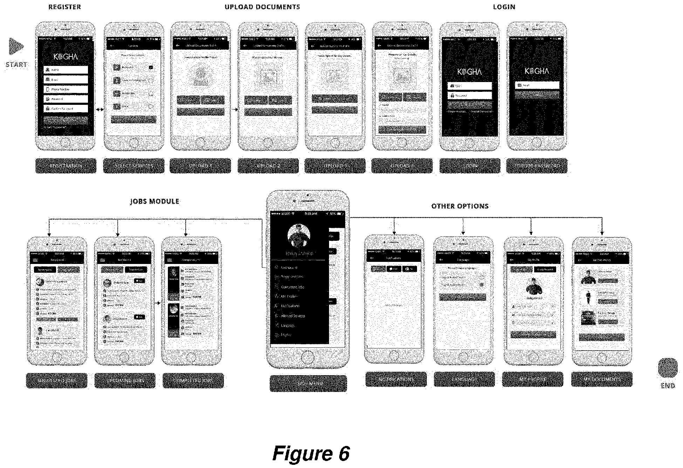

**Figure 6** illustrates an example of user interface and user experience of mobile application for registration of personal security candidate of a computer-implemented method for providing personalized security services to the user via a computing device in accordance of the present invention. When information is transferred, or provided over a network or another communications connection (either hardwired, wireless, or a combination of hardwired or wireless) to a computer, the computer properly views the connection as a computer-readable medium. Thus, any such connection may be properly termed a computer-readable medium. Combinations of the above are also be included within the scope of computer-readable media. Computer-executable instructions may include, for example, instructions and data which cause a general-purpose computer, special purpose computer, or special purpose processing device to perform a certain function or group of functions. Optionally, the location data is repeatedly updated until the user and the assigned personal security candidate are collocated. The software application such as mobile app in the personal security candidates can even direct the personal security candidate to the location of the user in case of a lost network connection by using an offline mode. This is of great use e.g. in a natural disaster or terrorist attack where cellular networks often happen to stop being functional by the security situation itself or due to overloading.

The invention is described in the general context of operational steps which may be implemented in one embodiment by a program product including computer-executable instructions, such as program code, executed by computers in networked environments. Generally, program code may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represent examples of corresponding acts for implementing the functions described in such steps.

The present invention in some embodiments, may be operated in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the Internet. Those skilled in the art will appreciate that such network computing environments will typically encompass many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a communication of hardwired or wireless links) through a communications network. In a distributed computing environment, program modules may be in both local and remote memory storage devices. The data storage computer system of the present invention can by any of a variety of appropriate computer system with associated storage devices, such as cloud-based computer systems with associated data storage subsystems. The other computing devices can be any of a variety of appropriate computing device and/or computer system, such as mobile computing devices, desktop computers, and/or computer servers.

Additionally, the data storage system of the present invention may also obtain and store raw data from the mobile computing device, such as raw GPS data and/or raw sensor data (e.g., motion sensor data), in addition to synthesized information from the mobile computing device (e.g., geographic location determined by the mobile computing device). The data being transmitted may also allow secure communication and encryption of data, as well as verification of the user transmitting the data, and the time and location from where it was transmitted. For example, the data being transmitted can be encrypted along with a username, password, time, location, biometrics, public or private cryptographic key, other security identifiers, or other information. The information being transmitted can be encrypted or stored to be only accessible or readable to the user himself, or to someone with appropriate security information. The privacy of the user, or the user's identity, can also be secured and maintained cryptographically. These encryption steps may be performed locally on the mobile device of the user. These encryption steps may be performed on the responder device. These encryption steps may be performed on a remote server.

Other advantage of the system of the present invention, it reduces redundancy of the replications of cost and time by assigning security job digitally rather than manually. The system of the present invention allows the user to get the personalized security services when needed especially during emergency and life-threatening situation. The system further provides a complete visibility of orders, requests, backlogs and trends from the users which allows the decision maker or personal administration to add more or reduce the personalized security services in different geographical location due to demand from users.

The foregoing detailed description and examples are merely illustrative of the preferred embodiments. They are by no means meant to be the exclusive description of the inventive concept hereby disclosed. It will be recognized by one of ordinary skill in the art that certain aspects of the practice of the invention are readily susceptible to modification or practice by alternative, known means.

**Claims**

1. A computer-implemented method for providing a real time personalized security services comprising
selecting pick-up point, drop-off point and destination for personalized security services by a user via a computing device;
selecting a booking type and type of services of the personalized security services;
selecting a service category of the personalized security services;
selecting quantity and duration of deployment for personalized security services;
selecting apparel to be worn by a personal security candidate during an assignment of a duty and providing special instructions to the personal security candidate prior an engagement of the duty;
matching the selected criteria by the user to personal security candidates available in the database of the server in the system;
upon confirmation of at least one selected personal security candidate, making pre-payment in the computing device of the user as pre-determined personalized security services;
sending notification to a computing device of at least one selected personal security candidate and assigning the security job to the at least one selected personal security candidate;
receiving notification of the official receipt for the payment made from the system; and
meeting at least one selected personal security candidate at the selected location to provide the personalized security services.

2. The method as claimed in Claim 1 wherein the step of selecting a booking type and type of services of the personalized security services further comprising
if a selected option is an immediate booking for the personalized security services, providing list of personal security candidates available in the database of the server in real-time within vicinity of the user's computing device for selection via Global Positioning System (GPS) location;
if a selected option is a schedule booking for the personalized security services, providing list of personal security candidates available in the database of the server as per scheduled time and date requested by the user for selection.

3. The method claimed in Claim 1 wherein the step selecting a service category of the personalized security services further comprising
Selecting one of the following categories for personalized security services

    a) bodyguard services to the user;
    b) chauffeur and bodyguard services to the user;
    c) chauffeur services to the user;
    d) chauffeur and bodyguard services using the selected personal security candidate's unmarked vehicle to the user; and
    e) security services for premises, tailgating services and marshaling services to the user.

4. The method as claimed in Claim 1 further comprising of evaluating personalized security services by the user by providing feedback on the job performance of each selected personal security candidate after completion of the personalized security services.

5. A system for providing a real-time personalized security services comprising:

    a user module in a server of the system by providing an user to download as a software application in a computing device and register the details of the user into the system for allowing the user to place an order for requesting personalized security services using the user's computing device wherein the user is allowed to select personalized security services based on booking type and type of services, selection service category of personalized security services, selection of uniform of the selected personal security candidate;
    a personal security candidate module in the server of the system by providing a personal security candidate to download as a software application in a computing device and register in the system as personal security candidate wherein the registered personal security candidate is ready to be selected by the user in the computing device to provide the personalized security services in real-time and scheduled time and date; and
    an admin module in the server of the system by providing an personnel administration to download as a software application in a computing device to manage each order and request placed by the user in a software application in the computing device by tracking each order and request placed by the user and monitor status of each order and request from the user for the personalized security services in real-time and scheduled time and date.

**6.** The system as claimed in Claim 5 wherein the booking type and type of services of the personalized security services further comprising

if a selected option is an immediate booking for the personalized security services, providing list of personal security candidates available in the database of the server in real-time within vicinity of the user's computing device for selection via Global Positioning System (GPS) location; and

if a selected option is a schedule booking for the personalized security services, providing list of personal security candidates available in the database of the server as per scheduled time and date requested by the user for selection.

**7.** The system as claimed in Claim 5 wherein the selection service category of the personalized security services is based on one of the following categories for personalized security services:

a) bodyguard services to the user;
b) chauffeur and bodyguard services to the user;
c) chauffeur services to the user;
d) chauffeur and bodyguard services using the selected personal security candidate's unmarked vehicle to the user; and
e) security services for premises, tailgating services and marshaling services to the user.

**8.** The system as claimed in Claim 5 wherein the admin module in the server of the system is allowed to set up and regulate the cost of each category of the personalized security services.

**9.** The system as claimed in Claim 5 wherein the admin module in the server of the system is allowed to edit information for personalized security services in the system and to send customization notification to the user and personal security candidate.

**10.** The system as claimed in Claim 5 wherein the computing device is a mobile computing device directs the personal security candidate to the location of the user in case of a lost network connection by using an offline mode.

*Figure 1*

*Figure 2*

**302**

Start → Get Notification from Members

**304** **308**

YES — Select Members — NO → Remove Job from Member Dashboard

Required Members Selected — NO

**306**

YES

**308**

Payment ← NO

Payment Successful

**310**

YES

Notify Member for Job Confirmation → Start Job → Stop

**312** **314**

202

*Figure 3*

**402**

Start → Admin / Groups can add the member

**406**

Admin will approve / disapprove the member with reason or KIV

**404**

Member added by Admin

—NO—→

—YES—→

Member will be approved automatically

**408**

STOP

*Figure 4*

Login/ Register

Order Placement

Other Options

Other Options

START

END

**Figure 5**

REGISTER              UPLOAD DOCUMENTS                  LOGIN

JOBS MODULE                         OTHER OPTIONS

*Figure 6*

Europäisches
Patentamt

European
Patent Office

Office européen
des brevets

# EUROPEAN SEARCH REPORT

**Application Number**

EP 19 17 3469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/161554 A1 (SWEENEY MATTHEW [US] ET AL) 11 June 2015 (2015-06-11)<br>* figures 1A, 2 *<br>* paragraphs [0014] - [0031] *<br>----- | 1-10 | INV.<br>G06Q10/08<br>G06Q10/06<br>G06Q50/30 |

**TECHNICAL FIELDS SEARCHED (IPC)**

G06Q

The present search report has been drawn up for all claims

| Place of search | Date of completion of the search | Examiner |
|---|---|---|
| Munich | 17 June 2019 | Michalski, Stéphane |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 17 3469

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2019

| Patent document cited in search report | Publication date | Patent family member(s) | Publication date |
|---|---|---|---|
| US 2015161554 A1 | 11-06-2015 | AU 2014362378 A1<br>CA 2932828 A1<br>CN 105917376 A<br>EP 3080774 A1<br>US 2015161554 A1<br>US 2015161564 A1<br>US 2019095849 A1<br>WO 2015089207 A1 | 23-06-2016<br>18-06-2015<br>31-08-2016<br>19-10-2016<br>11-06-2015<br>11-06-2015<br>28-03-2019<br>18-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180046641 A
- KR 101714499

- WO 2017171614 A1